# EUROPEAN PATENT SPECIFICATION

(11) **EP 2 337 107 B1**
(45) Date of publication and mention of the grant of the patent: **19.09.2012**
(21) Application number: 10252151.5
(22) Date of filing: 17.12.2010
(51) Int. Cl.: H01M 2/02, H01M 2/16, H01M 2/18, H01M 10/04, H01M 10/052, H01M 10/0585

(54) **Rechargeable battery**
Wiederaufladbare Batterie
Batterie rechargeable

(30) Priority: 17.12.2009 US 287663 P; 03.12.2010 US 960415
(43) Date of publication of application: 22.06.2011
(73) Proprietor: Samsung SDI Co., Ltd., Yongin-si, Gyeonggi-do (KR)
(72) Inventor: Hwang, Po-Jung, Yongin-si, Gyeonggi-do (KR); Lee, Seung-Jae, Yongin-si, Gyeonggi-do (KR); Kang, Yoo-Myung, Yongin-si, Gyeonggi-do (KR); Ahn, Jae-Do, Yongin-si, Gyeonggi-do (KR); Yang, Jae-Min, Yongin-si, Gyeonggi-do (KR); Lee, Jeong-Heon, Yongin-si, Gyeonggi-do (KR); Song, Byeong-Yeol, Yongin-si, Gyeonggi-do (KR); Hwang, Jae-Hyun, Yongin-si, Gyeonggi-do (KR); Kim, Sung-Soo, Yongin-si, Gyeonggi-do (KR); Roh, Sae-Weon, Yongin-si, Gyeonggi-do (KR)
(74) Representative: Mounteney, Simon James

(56) References cited:
- JP-A- 7 272 761
- JP-A- 2002 208 442
- JP-A- 2004 014 528
- JP-A- 2008 091 100

## Description

### BACKGROUND OF THE INVENTION

### (a) Field of the Invention

The present invention relates to a rechargeable battery, and more particularly, to a separator finishing structure of a laminate type of electrode assembly.

### (b) Description of the Related Art

JP 2002 208442 A discloses an electrochemical device comprising a lamination body laminating positive electrodes and negative electrodes through separators, formed by strongly integrating at least partial areas of the peripheral part of the separator.

JP 2008 091100 A discloses a square lithium ion battery that has a positive electrode, a negative electrode 2, and a bag-formed separators equipped with a fused part in which peripheries of two sheets of rectangular separators are mutually fused.

A rechargeable battery differs from a primary battery in that it can be repeatedly charged and discharged, while the latter can only irreversibly convert chemical energy to electrical energy. A low-capacity rechargeable battery is used as a power supply for small electronic devices, such as cellular phones, notebook computers, and camcorders, while a high-capacity rechargeable battery is used as a power supply for driving motors in hybrid vehicles and the like.

A rechargeable battery basically includes an electrode assembly with a positive electrode plate, a separator, and a negative electrode plate, and a case receiving the electrode assembly. The case is formed with a cylindrical or prismatic metal can, or with a laminate sheet having a resin sheet layer and a metal sheet layer. The electrode assembly may be formed as a spiral-wound type or a laminate type depending upon the shape of the case.

With the laminate type of electrode assembly where several sheets of positive electrode plates, separators, and negative electrode plates are laminated, the edges of the separators protruded to the outside of the positive and negative electrode plates are tightly adhered to each other, and wrapped by an adhesive tape, thereby holding the shape of the electrode assembly.

However, if the rechargeable battery with a finishing structure based on the adhesive tape is used for a long period of time, the adhesion of the separators

becomes poor due to deterioration of the adhesive tape. As a result, the electrode assembly does not hold the initial bonding and the alignment thereof is broken so that the bonding between the positive and negative electrode plates is weakened and the performance characteristics of the rechargeable battery are significantly deteriorated.

### SUMMARY OF THE INVENTION

The present invention has been made in an effort to provide a rechargeable battery having advantages of making the electrode assembly hold an initial fixation characteristic even after long-time usage, in order to achieve high battery durability and long life span characteristics.

Accordingly, the invention provides a rechargeable battery as set out in Claim 1. Preferred features of the invention are set out in Claims 2 to 15.

Thus in an embodiment of the present invention, the extension portions of the separators are adhered to each other, thereby simplifying the finishing process of the separators and rigidly bonding the electrode assembly. Accordingly, the bonding between the positive and the negative electrode plates is held even after long-time usage so that the alignment thereof can be prevented from being broken and high structural stability and rigidity can be achieved.

### BRIEF DESCRIPTION OF THE DRAWINGS

FIG. 1 is a partial cut-away perspective view of a rechargeable battery according to the prior art.

FIG. 2 is a perspective view of an electrode assembly and electrode terminals in the rechargeable battery shown in FIG. 1.

FIG. 3 is a partial amplified sectional view of the electrode assembly shown in FIG. 2.

FIG. 4 is a partial amplified sectional view of an electrode assembly in a rechargeable battery according to an embodiement of the present invention

FIG. 5 is a partial amplified sectional view of an electrode assembly in a rechargeable battery according to a second embodiment of the present invention.

FIG. 6 is a partial amplified sectional view of an electrode assembly in a rechargeable battery according to a third embodiment of the present invention.

FIG. 7 is a partial amplified sectional view of an electrode assembly in a rechargeable battery according to a fourth embodiment of the present invention.

FIG. 8 is a perspective view of an electrode assembly in a rechargeable battery according to a fifth embodiment of the present invention.

FIG. 9 is a perspective view of an electrode assembly in a rechargeable battery according to a sixth embodiment of the present invention.

FIG. 10 is a perspective view of an electrode assembly in a rechargeable battery according to an seventh embodiment of the present invention.

FIG. 11 is a perspective view of an electrode assembly in a rechargeable battery according to a eighth embodiment of the present invention.

### DETAILED DESCRIPTION OF THE EMBODIMENTS

The present invention will be described more fully hereinafter with reference to the accompanying drawings, in which embodiments of the invention are shown. As those skilled in the art would realize, the described embodiments may be modified in various different ways without departing from the scope of the present invention.

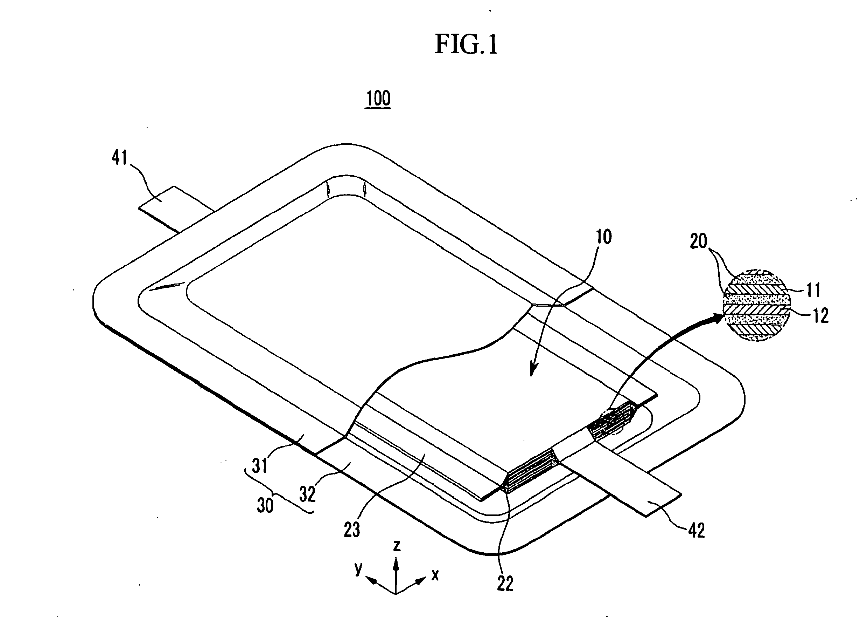

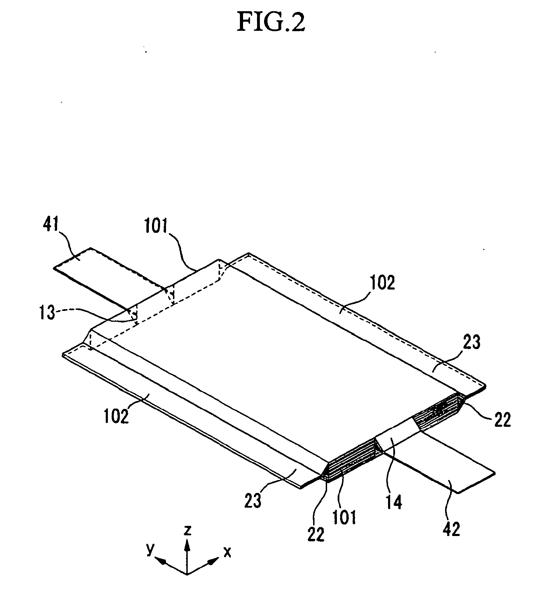

FIG. 1 is a partial cut-away perspective view of a rechargeable battery according to the prior art, and FIG. 2 is a perspective view of an electrode assembly and electrode terminals in the rechargeable battery shown in FIG. 1.

Referring to FIG. 1 and FIG. 2, the rechargeable battery 100 includes an electrode assembly 10 with positive electrode plates 11, separators 20, and negative electrode plates 12, a case 30 receiving the electrode assembly 10, and electrode terminals 41 and 42 connected to the electrode assembly 10 and drawn out of the case 30.

The separator 20, the positive electrode plate 11, the separator 20, the negative electrode plate 12, and the separator 20 are sequentially and repeatedly laminated so as to form a stack. In this sequence, the positive electrode plate 11 may be replaced by the negative electrode plate 12 and the negative electrode plate 12 by the positive electrode plate 11. One sheet of the separators 20 is disposed between the positive and negative electrode plates 11 and 12 such that two sheets of the separators 20 do not overlap each other.

The electrode terminals 41 and 42 include a positive electrode terminal 41 connected to the positive electrode plates 11, and a negative electrode terminal 42 connected to the negative electrode plates 12. The positive and negative electrode plates 11 and 12 include current collecting regions 13 and 14, respectively, which are protruded to the outside of the separators 20 and tightly adhered to each other through pressurizing them. The positive and negative electrode terminals 41 and 42 are connected to the current collecting region 13 of the positive electrode plates 11 and the current collecting region 14 of the negative electrode plates 12, respectively.

The positive and negative electrode terminals 41 and 42 may be drawn out to one side of the case 30 or to both sides thereof. FIG. 1 and FIG. 2 illustrate the case in which the current collecting region 13 of the positive electrode plates 11 and the current collecting region 14 of the negative electrode plates 12 are formed opposite to each other, and the positive and negative electrode terminals 41 and 42 are drawn out to both sides of the case 30.

The case 30 includes an upper case portion 31 with a concave center, and a lower case portion 32. The upper and lower case portions 31 and 32 may be formed with laminate sheets. The upper and lower case portions 31 and 32 receive the electrolyte-impregnated electrode assembly 10 therein, and are thermally welded to each other at the edges thereof so as to seal the electrode assembly 10. The shape and material of the case 30 are not limited to as above-described, but may be altered in various manners.

The electrode assembly 10 is roughly formed in the shape of a rectangular solid, although many other shapes are possible. The stack of the electrode assembly 10 includes a pair of first sides 101 facing each other in a first direction (in the y axis direction), and a pair of second sides 102 facing each other in a second direction (in the x axis direction). The current collecting regions 13 and 14 and the electrode terminals 41 and 42 are placed on at least one of the pair of first sides 101. The first sides 101 may be the short sides of the electrode assembly 10, and the second sides 102 may be the long sides thereof.

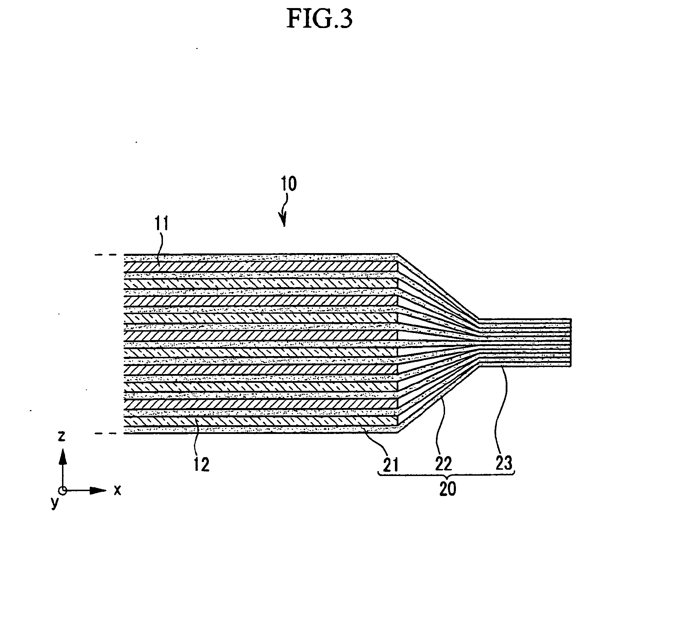

FIG. 3 is a partial amplified sectional view of the electrode assembly shown in FIG. 2.

Referring to FIG. 1 to FIG. 3, the separators 20 each include a separation portion 21 facing at least one of the positive and negative electrode plates 11 and 12 and overlapped therewith, and a pair of extension portions 22 extended from the separation portion 21 to the outside of the positive and negative electrode plates 11 and 12. The pair of extension portions 22 are placed at the second sides 102 where the current collecting regions 13 and 14 and the electrode terminals 41 and 42 are absent.

The extension portions 22 are overlapped with each other at the second sides 102, and are tightly adhered to each other at the edges thereof in a body through welding so as to form adhesion portions 23. The adhesion portions 23 are spaced from the edge of the stack and they are formed by melting and pressing the surfaces of the extension portions 22 together through thermal welding or ultrasonic welding such that the positive and negative electrode plates 11 and 12 are stably fixed between the separation portions 21 of the separators 20.

The adhesion portions 23 are all connected together, so as to bind the extension portions 22 of all the separators 20 provided in the electrode assembly 10 into one. Consequently, the welding-based finishing process of the separators 20 is simplified, and the bonding of the electrode assembly 10 becomes reinforced overall. The adhesion portions 23 have excellent adhesive strength and air tightness, and hence the extension portions 22 do not separate from each other even after long-term usage, so that the durability of the rechargeable battery 100 is effectively improved.

The extension portions 22 are symmetrically gathered in the thickness direction of the electrode assembly stack (in the z axis direction) so that the adhesion portions 23 can be joined in a central region of the stack in the thickness direction of the electrode assembly 10 (in the z axis direction). In this case, the adhesion 23 is formed while uniformly pressurizing the extension portions 22 so that the shape stability of the electrode assembly 10 can be enhanced.

The extension portions 22 and the adhesion portions 23 for bonding them are provided at the second sides 102 with a longer length than that of the first sides 101. Accordingly, the bonded area extends along the entire edge of the electrode assembly 10, and the fixation of the electrode assembly 10 is enhanced. Particularly, as the adhesion portions 23 have the same length as the second sides 102, the fixation of the electrode assembly 10 can be maximized.

In this way, with the rechargeable battery 100 according to this embodiment, the electrode assembly 10 rigidly bonds the extension portions 22 of the separators 20 over the entire area of the pair of second sides 102 by way of the adhesion portions 23. Consequently, even after long-time usage of the rechargeable battery 100, the bonding of the positive and negative electrode plates 11 and 12 is maintained therebetween so that the alignment thereof is prevented from being broken, thereby securing high structural stability and rigidity.

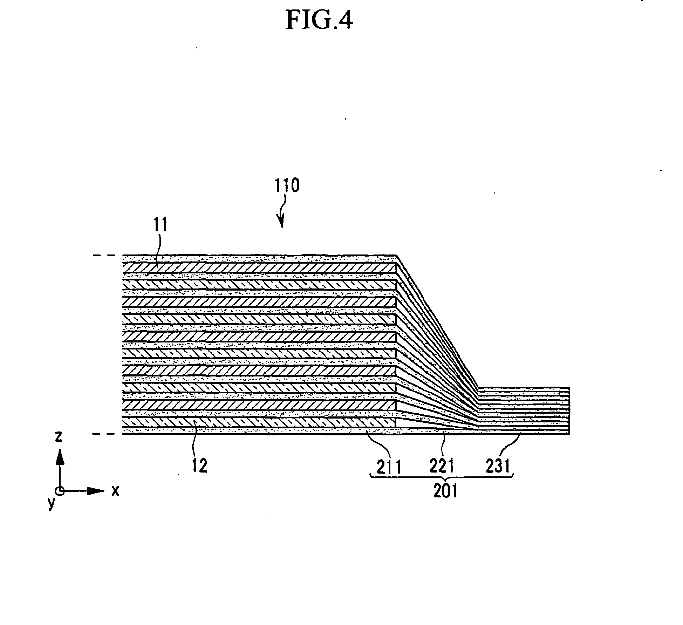

FIG. 4 is a partial amplified sectional view of an electrode assembly in a rechargeable battery according to a first embodiment of the present invention.

Referring to FIG. 4, the rechargeable battery has the same structural components as those of the rechargeable battery according to the prior art, except that extensions 221 are asymmetrically gathered in the thickness direction of the stack of the electrode assembly 110 (in the z axis direction), and a welded region 231 is biased to one side of the electrode assembly 110 in the thickness direction of the electrode assembly 110 (in the z axis direction).

Reference numeral 201 of FIG. 4 refers to the separator, and reference numeral 211 refers to the separation portion of the separator. The same reference numerals as with the rechargeable battery according to the prior art are used to refer to the structural components other than the separator.

The extension portions 221 according to the first embodiment are gathered toward the outermost extension, and the adhesion portions 231 are located at the extended top or bottom side of the stack of the electrode assembly 110. It is illustrated in FIG. 4 that the welded region 231 is located at the extended bottom side of the stack of the electrode assembly 110.

The extension portions 221 are disposed between a pair of heating plates (not shown) provided at a welder, and are pressurized and welded by way of the heating plates so as to form the adhesion portions 231. During this process, in the case of the prior art, the pair of heating plates simultaneously move so as to form the adhesion 23, whereas in the case of the first embodiment, only one heating plate moves while the other heating plate is fixed so as to form the adhesion heating plate moves while the other heating plate is fixed so as to form the adhesion portions 231. Therefore, the first embodiment can be more suitable for mass production.

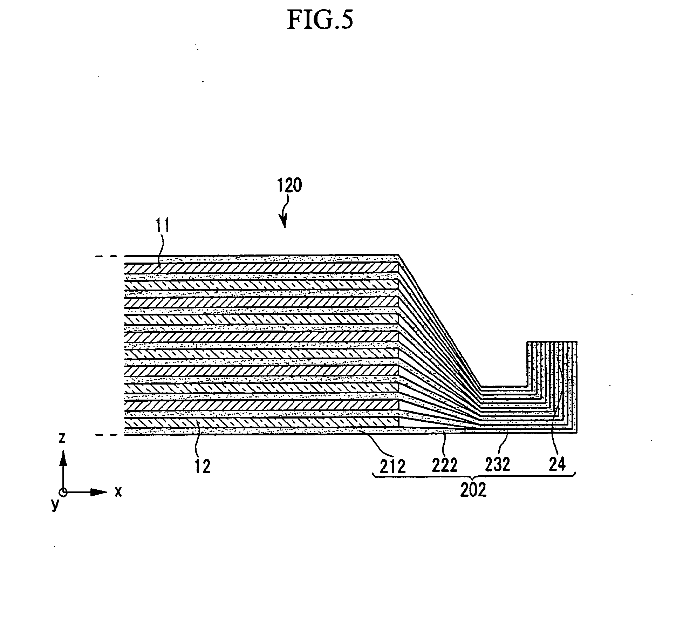

FIG. 5 is a partial amplified sectional view of an electrode assembly in a rechargeable battery according to a second embodiment of the present invention.

Referring to FIG. 5, the rechargeable battery has the same structural components as those of the rechargeable battery according to the first embodiment, except that adhesion portions 232 are biased to one side of the electrode assembly 120 in the thickness direction of the stack of the electrode assembly 120 (in the z axis direction), i.e., to the lower side of FIG. 5, while being bent to the other side of the electrode assembly 120, i.e., to the upper side of FIG. 5, so as to form a bent portion 24 at the end thereof. Each of the extension portions is therefore bent through 90° about a respective line that runs parallel to the edge of the stack. Other non-planar structures are possible within the scope of the invention.

Reference numeral 202 of FIG. 5 refers to the separator, reference numeral 212 refers to the separation portion of the separator, and reference numeral 222 refers to the extension of the separator. The same reference numerals as with the rechargeable battery according to the first embodiment are used to refer to the structural components other than the separator.

As the width of the adhesion portion 232 is increased, the bonding area of the extension portions is enlarged so that the bonding between the separators 202 is reinforced. However, as the adhesion portion 232 of the electrode assembly 120 does participate in battery reaction, when the width of the adhesion portion 232 is increased in comparison with the same-dimensioned case 30, the electrode area is reduced.

In this connection, with the structure where the adhesion portion 232 is bent so as to form a bent portion 24 parallel to the thickness direction of the stack of electrode plates 11 and 12 can be widened in comparison with the same-dimensioned case 30 while enlarging the width of the adhesion portion 232 to reinforce the bonding between the separators 202, thereby enhancing battery efficiency.

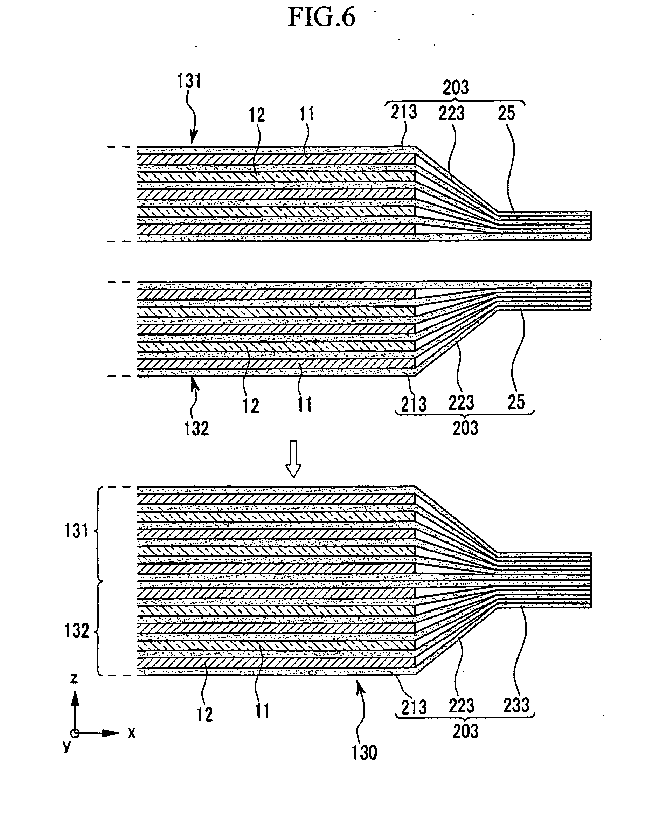

FIG. 6 is a partial amplified sectional view of an electrode assembly in a rechargeable battery according to a third embodiment of the present invention.

Referring to FIG. 6, the rechargeable battery has the same structural components as those of the rechargeable battery according to the prior art, except that the electrode assembly 130 has a laminate structure with a first sub-assembly 131 having at least one positive electrode plate 11, at least one negative electrode plate 12, and a preliminary welded region 25, and a second sub-assembly 132 having at least one positive electrode plate 11, at least one negative electrode plate 12, and a preliminary welded region 25. The preliminary welded region 25 of the first electrode assembly part 131 and the preliminary welded region 25 of the second electrode assembly part 132 are again welded so that the adhesion portions 233 are collectively adhered together.

It is illustrated in FIG. 6 that the electrode assembly 130 includes two sub-assemblies 131 and 132, but the rechargeable battery according to the fourth embodiment may include three electrode assembly parts or more, each with a preliminary welded region 25, and the preliminary welded regions 25 of the electrode assembly parts are again welded together.

Reference numeral 203 of FIG. 6 refers to the separator, reference numeral 213 refers to the separation portion of the separator, and reference numeral 223 refers to the extension portion of the separator. The same reference numerals as with the rechargeable battery according to the first embodiment are used to refer to the structural components other than the separator 203.

The edges of the separators 203 are welded to each other with respect to the respective first and second electrode assembly parts 131 and 132 to form the preliminary welded regions 25. The first and second electrode assembly parts 131 and 132 are laminated, and the two preliminary welded regions 25 are welded to each other. In this case, two separators 203 exist at the contact area of the first and second electrode assembly parts 131 and 132. That is, the outermost separator of one of the electrode assembly parts is overlapped with the outermost separator of the other electrode assembly part.

In this way, when the electrode assembly 130 is divided into two parts or more and preliminary welded regions 25 are formed, the electrode assembly 130 is effectively prevented from being distorted or defective during the welding process, thereby enhancing the quality of the electrode assembly 130. FIG. 6 illustrates that the first and second electrode assembly parts 131 and 132 are provided with six sheets of separators 203, but the number of separators 203 contained in the respective electrode assembly parts is not limited to as illustrated.

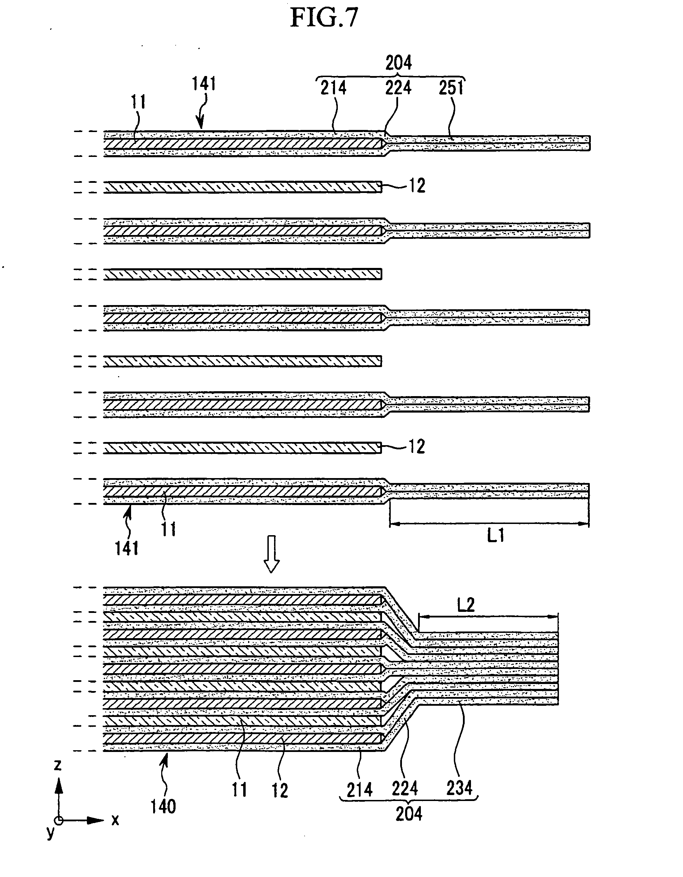

FIG. 7 is a partial amplified sectional view of an electrode assembly in a rechargeable battery according to a fourth embodiment of the present invention.

Referring to FIG. 7, the rechargeable battery according to the fourth embodiment has the same structural components as those of the rechargeable battery according to the prior art, except that the electrode assembly 140 has a laminate structure with a plurality of sub-assemblies each having one positive electrode plate 11 or negative electrode plate 12, two sheets of separators 204, and a preliminary welded region 251, and a plurality of negative electrode plates 12 or positive electrode plates 11 disposed between the sub-assemblies while being tightly adhered thereto. The preliminary welded regions 251 are again welded to each other that the adhesion portions 234 are collectively adhered together.

Reference numeral 214 of FIG. 7 refers to the separation portion of the separator, and reference numeral 224 the extension portion of the separator. The same reference numerals as for the rechargeable battery according to the prior art are used to refer to the structural components other than the separator 204.

A positive electrode plate 11 or negative electrode plate 12 is disposed between two sheets of separators 204, and the edges of the two extension portions 224 are welded to each other so as to form the preliminary welded region 251. In this way, a plurality of sub-assemblies 141 are formed and sequentially laminated together with a plurality of negative electrode plates 12 or positive electrode plates 11. The laminated preliminary welded regions 251 are again welded to each other. In this case, the length L1 of the preliminary welded region 251 measured at each sub-assembly 141 may be larger than the length L2 of the adhesion portions 234 measured at the electrode assembly 140 as a whole.

As described above, when the electrode assembly 140 is formed with a plurality of sub-assemblies 141, the electrode assembly 140 is prevented from being distorted or defective during the welding process, thereby enhancing the quality of the electrode assembly, as with the third embodiment.

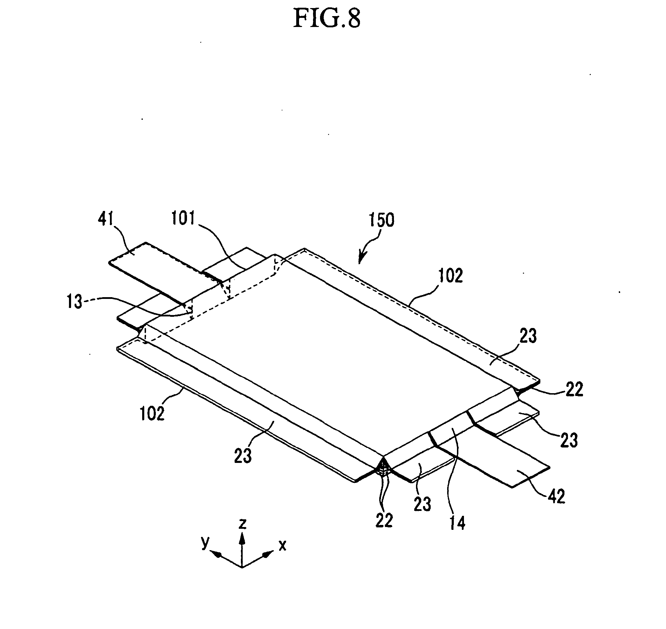

FIG. 8 is a perspective view of an electrode assembly in a rechargeable battery according to a fifth embodiment of the present invention.

Referring to FIG. 8, the rechargeable battery according to the fifth embodiment has the same structural components as those of the rechargeable battery according to any one of the second to fourth embodiments of the present invention, except that extension portions 22 are formed at the first sides 101 of the electrode assembly 150 except for the current collecting regions 13 and 14 as well as at the second sides 102 of the electrode assembly 150, and an adhesion portion 23 is formed at the edge of each extension 22. FIG. 8 illustrates the case in which the features according to the fifth embodiment are combined with the structure according to the prior art.

With the fifth embodiment, the adhesion portions 23 are formed over the entire length of the first sides 101 except for the current collecting regions 13 and 14, and the second sides 102. Accordingly, compared with the second to fourth embodiments, the bonded area along the edge of the electrode assembly 150 is enlarged so as to achieve excellent structural stability and rigidity.

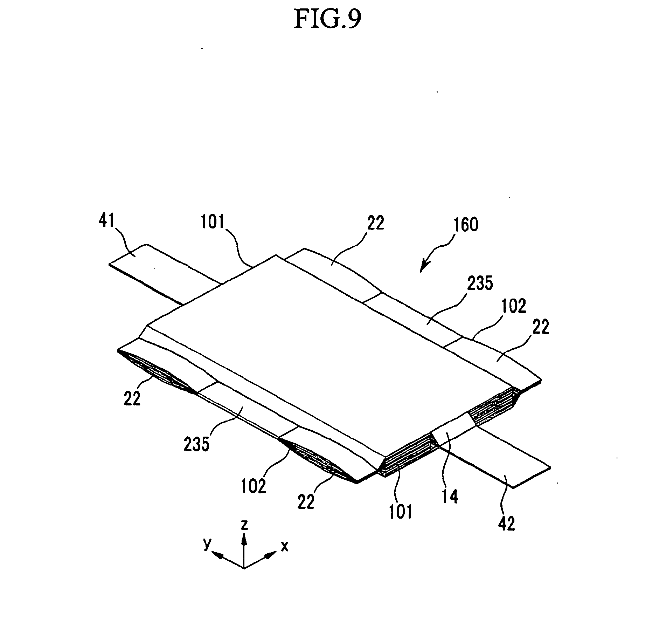

FIG. 9 is a perspective view of an electrode assembly in a rechargeable battery according to a sixth embodiment of the present invention.

Referring to FIG. 9, the rechargeable battery according to the sixth embodiment has the same structural components as those of the rechargeable battery according to any one of the second to fourth embodiments, except that the adhesion portions 235 have a shorter length than that of the second side 102 and is located at the center of the second side 102. FIG. 9 illustrates the case in which the features according to the sixth embodiment are combined with the structure according to the prior art.

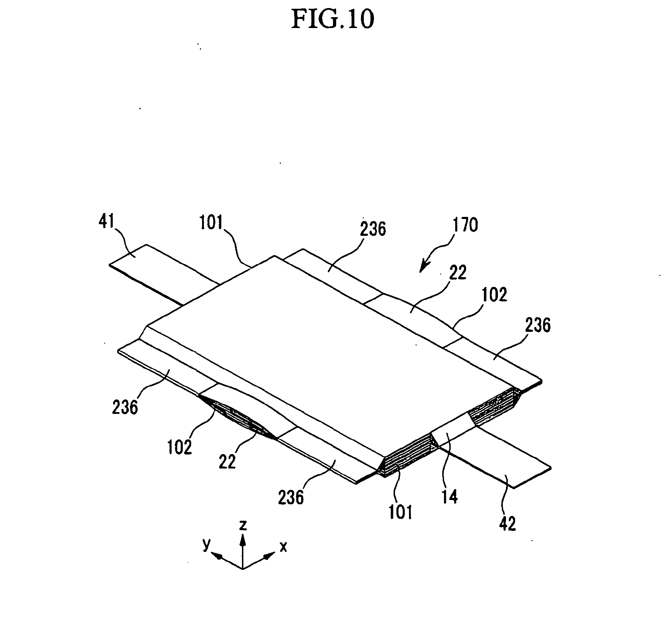

FIG. 10 is a perspective view of an electrode assembly in a rechargeable battery according to an seventh embodiment of the present invention.

Referring to FIG. 10, the rechargeable battery according to the seventh embodiment has the same structural components as those of the rechargeable battery according to any one of the second to fourth embodiments, except that two adhesion portions 236 are formed at the respective second sides 102 while being spaced apart from each other by a distance. FIG. 10 illustrates the case in which the features according to the seventh embodiment are combined with the structure according to the prior art.

With the electrode assemblies 160 and 170 according to the sixth and seventh embodiments, the extensions 22 are laminated through pressurizing at the second sides 102 except for the welded regions 235 and 236, but are not welded so that a predetermined gap is formed between the laminated extensions 22.

When the rechargeable batteries according to the sixth and seventh embodiments are compared with the rechargeable batteries according to the second to fifth embodiments, the adhesion portions 235 and 236 have a shorter length than that of the second sides 102 so that the electrode assemblies 160 and 170 have lowered rigidity, but they have an enhanced electrolyte impregnation characteristic, as the electrode assemblies 160 and 170 are easily impregnated with the electrolyte through the gap between the extensions 22.

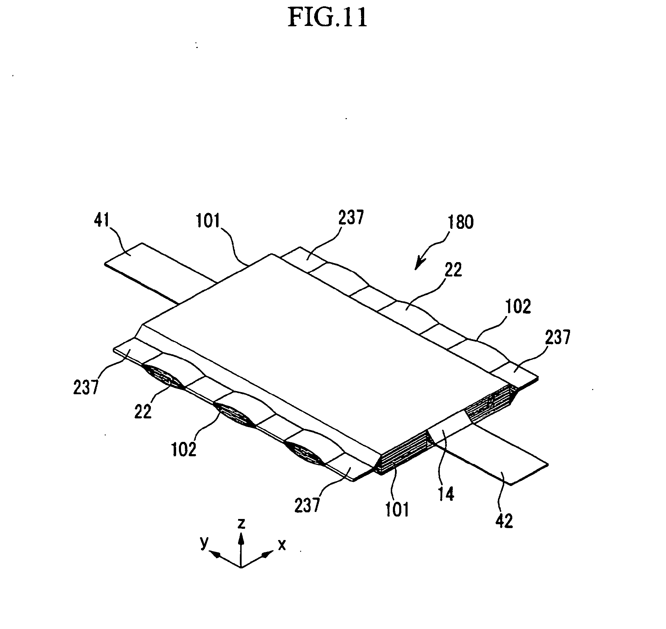

FIG. 11 is a perspective view of an electrode assembly in a rechargeable battery according to a eighth embodiment of the present invention.

Referring to FIG. 11, the rechargeable battery according to the eighth embodiment has the same structural components as those of the rechargeable battery according to any one of the second to fourth embodiments, except that three or more adhesion portions 237 are formed at the respective second sides 102 while being spaced apart from each other by a distance. FIG. 11 illustrates the case in which the features according to the eighth embodiment are combined with the structure according to the prior art.

With the electrode assembly 180 according to the eighth embodiment, the extension portions 22 are laminated through pressurizing at the second sides 102 except for the welded regions, but are not welded so that a predetermined gap is formed between the extension portions 22.

Three or more adhesion portions 237 are formed at the second side 102 while being spaced apart from each other at discrete intervals so that uniform fixation occurs in the longitudinal direction of the second side 102, and the electrode assembly 180 is uniformly impregnated with the electrolyte through the gap between the extension portions 22. Accordingly, the rechargeable battery according to the eighth embodiment properly has excellent rigidity that is the advantage of the rechargeable batteries according to the second to fifth embodiments, and an excellent electrolyte impregnation characteristic that is the advantage of the rechargeable batteries according to the sixth and seventh embodiments.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

## Claims

1. A rechargeable battery (100) comprising:
an electrode assembly (10, 110, 120, 130, 140, 150, 160, 170, 180) including a plurality of positive electrode plates (11), a plurality of negative electrode plates (12) and a plurality of separators (20), the said electrode plates (11, 12) and separators (20) being arranged to form a stack; and
a case (30), in which the electrode assembly (10) is accommodated;
wherein each separator (20) comprises a separation portion (21) located adjacent at least one of the positive and negative electrode plates (11, 12) in the stack and an extension portion (22) that extends beyond the stack;
and wherein the said extension portions (22) are gathered together, with each extension portion (22) being adhered to at least one other extension portion (22) via an adhesion portion (23) thereof, **characterised in that** the extension portions (22) are asymmetrically gathered in terms of the thickness direction of the stack.

2. A rechargeable battery (100) according to Claim 1, wherein the adhesion between the extension portions (22) is caused by welding.

3. A rechargeable battery (100) according to Claim 1 or 2, wherein the adhesion portions (23) are each located in a respective region of an extension portion (22) that is spaced from an edge of the stack.

4. A rechargeable battery (100) according to any preceding claim, wherein the adhesion portions (231) are aligned with either a top region or a bottom region of the stack.

5. A rechargeable battery (100) according to any preceding claim, wherein the said extension portions (221) are non-planar.

6. A rechargeable battery (100) according to Claim 5, wherein the extension portions (222) are each bent about a line extending parallel to an edge of the stack from which they project.

7. A rechargeable battery (100) according to Claim 6, wherein the extension portions (222) are each bent through 90 degrees.

8. A rechargeable battery (100) according to any preceding claim, wherein the electrode assembly (130, 140) is composed of a plurality of sub-assemblies (131, 132, 141) arranged one upon another in the thickness direction of the stack.

9. A rechargeable battery (100) according to Claim 8, wherein each sub-assembly (131, 132) comprises at least one positive electrode (11) and at least one negative electrode (12).

10. A rechargeable battery (100) according to Claim 8, wherein each sub-assembly (141) comprises a said electrode plate (11, 12) having a first polarity and two said separators (204), the electrode plate (11, 12) being sandwiched between the separators (204); and wherein adjacent said sub-assemblies (141) are interspersed with electrode plates (12, 11) having a second polarity.

11. A rechargeable battery (100) according to one of Claims 8 to 10, wherein at least one extension portion (223, 224) of each sub-assembly (131, 132, 141) is adhered to at least one extension portion (223, 224) of an adjacent sub-assembly (131, 132, 141) via an adhesion portion (233, 234) thereof.

12. A rechargeable battery (100) according to any preceding claim, wherein the case (30) is substantially rectangular and the adhesion portions (23) extend along substantially the entire length of at least one long side of the said stack.

13. A rechargeable battery (100) according to Claim 12, wherein the adhesion portions (23) also extend along at least part of a short side of the said stack.

14. A rechargeable battery (100) according to any one of Claims 1 to 11, wherein the adhesion portions (235, 236, 237) are shorter in length than a side of the stack upon which they are situated.

15. A rechargeable battery (100) according to Claim 14, wherein the adhesion portions (237) are located at discrete intervals along at least one side of the stack.

## Patentansprüche

1. Wiederaufladbare Batterie (100), umfassend:
eine Elektrodenanordnung (10, 110, 120, 130, 140, 150, 160, 170, 180), die eine Mehrzahl von positiven Elektrodenplatten (11), eine Mehrzahl von negativen Elektrodenplatten (12) und eine Mehrzahl von Trennelementen (20) umfasst, wobei die Elektrodenplatten (11, 12) und die Trennelemente (20) so angeordnet sind, dass sie einen Stapel bilden; und
ein Gehäuse (30), in dem die Elektrodenanordnung (10) untergebracht ist;
wobei jedes Trennelement (20) einen Trennabschnitt (21), der benachbart zu wenigstens einer der positiven oder negativen Elektrodenplatten (11, 12) im Stapel angeordnet ist, und einen Verlängerungsabschnitt (22) umfasst, der sich über den Stapel hinaus erstreckt;
und wobei die Verlängerungsabschnitte (22) zusammengesammelt sind, wobei jeder Verlängerungsabschnitt (22) über einen Haftabschnitt (23) davon an mindestens einem anderen Verlängerungsabschnitt (22) haftet, **dadurch gekennzeichnet, dass** die Verlängerungsabschnitte (22) in Bezug auf die Dickenrichtung des Stapels symmetrisch gesammelt sind.

2. Wiederaufladbare Batterie (100) nach Anspruch 1, wobei die Haftung zwischen den Verlängerungsabschnitten (22) durch Schweißen bewirkt ist.

3. Wiederaufladbare Batterie (100) nach Anspruch 1 oder 2, wobei sich die Haftabschnitte (23) in einem jeweiligen Bereich eines Verlängerungsabschnitts (22) befinden, der von einer Kante des Stapels beabstandet ist.

4. Wiederaufladbare Batterie (100) nach einem der vorhergehenden Anspruche, wobei die Haftabschnitte (231) entweder mit einem oberen Bereich oder einem unteren Bereich des Stapels ausgerichtet sind.

5. Wiederaufladbare Batterie (100) nach einem der vorhergehenden Ansprüche, wobei die Verlängerungsabsehnitte (221) nicht planar sind.

6. Wiederaufladbare Batterie (100) nach Anspruch 5, wobei die Verlängerungsabschnitte (222) jeweils um eine Linie gebogen sind, die sich parallel zu einer Kante des Stapels erstreckt, von der sie vorstehen.

7. Wiederaufladbare Batterie (100) nach Anspruch 6, wobei die Verlängerungsabschnitte (222) um 90 Grad gebogen sind.

8. Wiederaufladbare Batterie (100) nach einem der vorhergehenden Ansprüche, wobei die Elektrodenanordnung (130, 140) aus einer Mehrzahl von Unteranordnungen (131, 132, 141) besteht, die in der Dickenrichtung des Stapels aufeinander angeordnet sind.

9. Wiederaufladbare Batterie (100) nach Anspruch 8, wobei jede Unteranordnung (131, 132) mindestens eine positive Elektrode (11) und mindestens eine negative Elektrode (12) umfasst.

10. Wiederaufladbare Batterie (100) nach Anspruch 8, wobei jede Unteranordnung (141) eine der Elektrodenplatten (11, 12) mit einer ersten Polarität und zwei Trennelemente (204) umfasst, wobei die Elektrodenplatte (11, 12) zwischen die Trennelemente (204) eingefügt ist; und wobei benachbarte der Unteranordnungen (141) mit Elektrodenplatten (12, 11) mit einer zweiten Polarität durchsetzt sind.

11. Wiederaufladbare Batterie (100) nach einem der Ansprüche 8 bis 10, wobei mindestens ein Verlängerungsabschnitt (223, 224) jeder Unteranordnung (131, 132, 141) über einen Haftabschnitt (233, 234) davon an mindestens einem Verlängerungsabschnitt (223, 224) einer benachbarten Unteranordnung (131, 132, 141) haftet.

12. Wiederaufladbare Batterie (100) nach einem der vorhergehenden Anspräche, wobei das Gehäuse (30) im Wesentlichen rechteckig ist und die Haftabschnitte (23) sich entlang im Wesentlichen der gesamten Länge mindestens einer langen Seite des Stapels erstrecken.

13. Wiederaufladbare Batterie (100) nach Anspruch 12, wobei die Haftabschnitte (23) sich auch entlang mindestens eines Teils einer kurzen Seite des Stapels erstrecken.

14. Wiederaufladbare Batterie (100) nach einem der Anspräche 1 bis 11, wobei die Haftabschnitte (235, 236, 237) eine kürzere Länge aufweisen als eine Seite des Stapels, auf der sie angeordnet sind.

15. Wiederaufladbare Batterie (100) nach Anspruch 14, wobei die Haftabschnitte (237) in diskreten Intervallen entlang mindestens einer Seite des Stapels angeordnet sind.

## Revendications

1. Batterie rechargeable (100) comprenant :
un assemblage d'électrodes (10, 110, 120, 140, 150, 160, 170, 180) comprenant une pluralité de plaques d'électrodes positives (11), une pluralité de plaques d'électrodes négatives (12) et une pluralité de séparateurs (20), lesdites plaques d'électrodes (11, 12) et lesdits séparateurs (20) étant disposés pour former un empilement ; et
un boîtier (30), dans lequel est logé l'assemblage d'électrodes (10) ;
dans laquelle chaque séparateur (20) comprend une portion de séparation (21) située en position adjacente à au moins une des plaques d'électrodes positives et négatives (11, 12) dans l'empilement et une portion d'extension (22) qui s'étend au-delà de l'empilement ;
et dans laquelle lesdites portions d'extension (22) sont réunies, chaque portion d'extension (22) adhérant à au moins une autre portion d'extension (22) par une portion d'adhérence (23) de celle-ci, **caractérisée en ce que** les portions d'extension (22) sont réunies de manière asymétrique en termes de direction d'épaisseur de l'empilement.

2. Batterie rechargeable (100) suivant la revendication 1, dans laquelle l'adhérence entre les portions d'extension (22) est réalisée par soudage.

3. Batterie rechargeable (100) suivant la revendication 1 ou 2, dans laquelle les portions d'adhérence (23) sont chacune situées dans une région respective d'une portion d'extension (22) qui est espacée d'un bord de l'empilement.

4. Batterie rechargeable (100) suivant l'une quelconque des revendications précédentes, dans laquelle les portions d'adhérence (231) sont alignées avec soit une région supérieure soit une région inférieure de l'empilement.

5. Batterie rechargeable (100) suivant l'une quelconque des revendications précédentes, dans laquelle lesdites portions d'extension (221) sont non planes.

6. Batterie rechargeable (100) suivant la revendication 5, dans laquelle les portions d'extension (222) sont chacune fléchies suivant une ligne s'étendant parallèlement à un bord de l'empilement à partir duquel elles se projettent.

7. Batterie rechargeable (100) suivant la revendication 6, dans laquelle les portions d'extension (222) sont chacune fléchies suivant un angle de 90 degrés.

8. Batterie rechargeable (100) suivant l'une quelconque des revendications précédentes, dans laquelle l'assemblage d'électrodes (130, 140) est constitué d'une pluralité de sous-assemblages (131, 132, 142) disposés les uns sur les autres dans la direction d'épaisseur de l'empilement.

9. Batterie rechargeable (100) suivant la revendication 8, dans laquelle chaque sous-assemblage (131, 132) comprend au moins une électrode positive (11) et au moins une électrode négative (12).

10. Batterie rechargeable (100) suivant la revendication 8, dans laquelle chaque sous-assemblage (141) comprend une telle plaque d'électrode (11, 12) ayant une première polarité et deux desdits séparateurs (204), la plaque d'électrode (11, 12) étant intercalée entre les séparateurs (204) ; et dans laquelle lesdits sous-assemblages adjacents (141) sont intercalés avec des plaques d'électrodes (12, 11) ayant une seconde polarité.

11. Batterie rechargeable (100) suivant l'une des revendications 8 à 10, dans laquelle au moins une portion d'extension (223, 224) de chaque sous-assemblage (131, 132, 141) adhère à au moins une portion d'extension (223, 224) d'un sous-assemblage adjacent (131, 132, 141) par sa portion d'adhérence (233, 234).

12. Batterie rechargeable (100) suivant l'une quelconque des revendications précédentes, dans laquelle le boîtier (30) est substantiellement rectangulaire et les portions d'adhérence (23) s'étendent le long de pratiquement de la longeur totale d'au moins un long côté dudit empilement.

13. Batterie rechargeable (100) suivant la revendication 12, dans laquelle les portions d'adhérence (23) s'étendent également le long d'au moins une partie d'un côté court dudit empilement.

14. Batterie rechargeable (100) suivant l'une quelconque des revendications 1 à 11, dans laquelle les portions d'adhérence (235, 236, 237) ont une longueur inférieure à celle d'un côté de l'empilement sur lequel elles sont situées.

15. Batterie rechargeable (100) suivant la revendication 14, dans laquelle les portions d'adhérence (237) sont situées à des intervalles discrets le long d'au moins un côté de l'empilement.
